Europäisches Patentamt

European Patent Office

Office européen des brevets

(19)

(11) **EP 0 848 509 A1**

(12) # DEMANDE DE BREVET EUROPEEN

(43) Date de publication:
**17.06.1998 Bulletin 1998/25**

(51) Int Cl.$^6$: **H04B 7/26**

(21) Numéro de dépôt: **97402961.3**

(22) Date de dépôt: **08.12.1997**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **12.12.1996 FR 9615269**

(71) Demandeur: **ALCATEL ALSTHOM COMPAGNIE GENERALE D'ELECTRICITE**
**75008 Paris (FR)**

(72) Inventeur: **Dupuy, Pierre**
**75017 Paris (FR)**

(74) Mandataire: **El Manouni, Josiane et al**
**Alcatel Alsthom Recherche DPI,**
**30, avenue Kléber**
**75016 Paris (FR)**

(54) **Procédé de correction de l'effet Doppler dans un réseau de radiocommunications avec les mobiles**

(57)    L'invention propose un procédé de correction de l'effet Doppler dans un réseau de radiocommunications avec les mobiles. Le procédé est caractérisé en ce qu'il comprend les étapes de:

- mesure par une station de base courante (B1) d'une dérive fréquentielle aller-retour (2.ΔFD1 ± ΔFM) entre elle-même et un mobile (M),

- émission par ladite station de base courante (B1) à destination du mobile (M) d'une valeur de correction fréquentielle qui est fonction de ladite dérive fréquentielle (2.ΔFD1 ± ΔFM), et
- correction par le mobile (M) d'une référence de fréquence locale en fonction de ladite valeur de correction fréquentielle.

FIG. 2

EP 0 848 509 A1

## Description

La présente invention concerne de manière générale un procédé de correction de l'effet Doppler dans un réseau de radiocommunications avec les mobiles, ainsi qu'une station de base et un terminal pour la mise en oeuvre de ce procédé. L'invention peut être mise en oeuvre dans tout type de réseau de radiocommunications avec les mobiles, qu'il soit terrestre ou par satellite.

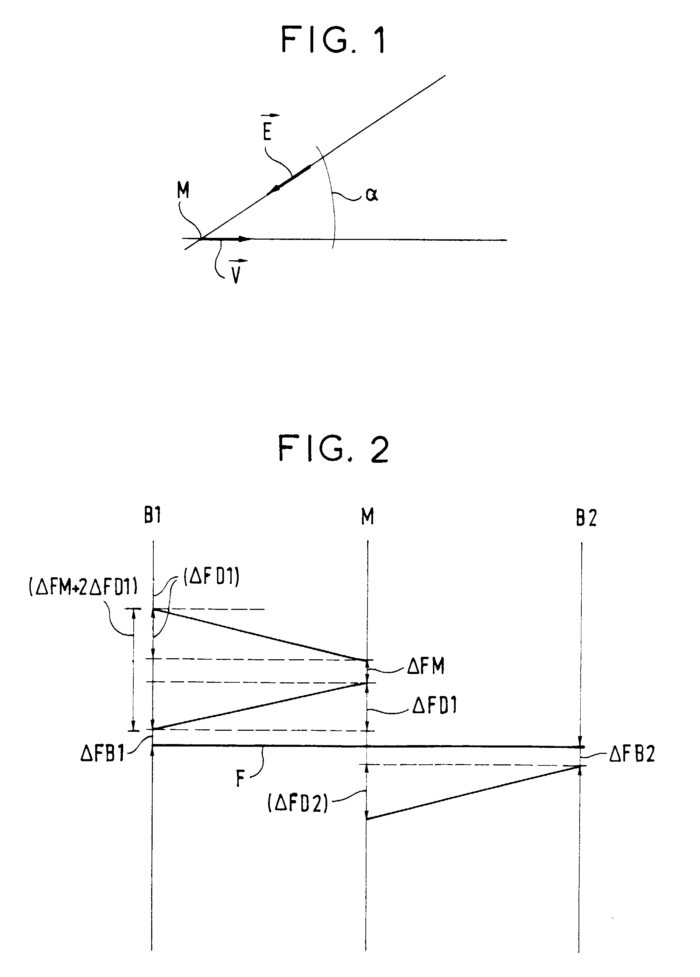

L'effet Doppler s'applique à toute forme d'onde qui est émise à destination ou reçue en provenance d'un terminal mobile, ou mobile, en déplacement. En référence à la figure 1, si F est la fréquence d'une onde émise, l'effet Doppler décale à la réception, la fréquence de cette onde émise d'une quantité :

$$\Delta F = F. (V/c).\cos (\alpha),$$

V étant la vitesse du mobile, c la vitesse de propagation de l'onde, et a l'angle entre le vecteur vitesse $\vec{V}$ du mobile et le vecteur de propagation $\vec{E}$ de l'onde émise.

Ce décalage de fréquence qui est induit par l'effet Doppler croît en fonction de la vitesse du mobile et doit avantageusement être compensé pour garantir une bonne réception des données par le mobile.

Pour expliquer le problème de décalage fréquentiel induit par l'effet Doppler, il est maintenant fait référence à la figure 2. En pratique, certains réseaux de radiocommunications avec les mobiles, tels que GSM (Global System for Mobile communications), recourent à deux fréquences par communication, une première fréquence étant allouée à la modulation des données émises du mobile M vers la station de base, B1 ou B2, et une seconde fréquence étant allouée à la modulation des données émises de la station de base, B1 ou B2, vers le mobile M. Néanmoins, dans la représentation de la figure 2, seule une fréquence, notée F, est supposée être utilisée à la fois pour les liaisons montante et descendante entre station de base B1 et mobile M et pour les liaisons montante et descendante entre station de base B2 et mobile M. Il est ainsi fait abstraction (a)de la différence normative (qui est multiple de 200 kHz dans le cadre du GSM) entre les deux fréquences de réception, ainsi que les deux fréquences d'émission, respectivement produites par deux stations de base voisines ainsi que (b)de la différence normative (qui est égale à 45 MHz dans le cadre du GSM) entre les fréquences de réception et d'émission pour une même station de base. Cela a pour objectif de simplifier la représentation en ne prenant en compte les dérives de fréquence dans les échanges de données entre mobile M et station de base B1 et B2 que par rapport à une seule référence qui est la fréquence F.

Il faut bien noter que pour ce qui concerne le seul problème des dérives de fréquence, la figure 2 est parfaitement représentative, même pour les réseaux de type GSM, sachant que le mobile génère une fréquence locale en fonction d'une référence de fréquence qui correspond à une fréquence imposée par la station de base avec laquelle est établie la liaison radioélectrique. Ainsi, les dérives fréquentielles s'ajoutent, indépendamment du fait que deux fréquences distinctes sont utilisées respectivement comme fréquence d'émission et fréquence de réception.

Par rapport à la fréquence théorique, ou normative, F, la station de base courante B1 émet à destination du mobile avec une fréquence (F ± ΔFB1), ΔFB1 correspondant à une erreur fréquentielle interne à la station de base B1. Cette erreur fréquentielle est typiquement due aux caractéristiques imparfaites de l'oscillateur dans la station de base. L'effet Doppler, résultant du déplacement du mobile M par rapport à la station de base B1, induit une translation fréquentielle, en réception par le mobile M, de la fréquence (F ± ΔFB1) d'émission de la station de base B1. Ainsi, le mobile M reçoit une fréquence (F ± ΔFB1 + ΔFD1), ΔFD1 correspondant à la dérive fréquentielle induite par effet Doppler. En émission, le mobile M ayant asservi sa fréquence d'émission par rapport à la fréquence de réception (F ± ΔFB1 + ΔFD1), va émettre à la fréquence défini par (F ± ΔFB1 + ΔFD1 ± ΔFM), ΔFM définissant une dérive fréquentielle d'un oscillateur dans le mobile M. En résultat de l'effet Doppler, la station de base reçoit le signal émis par le mobile à la fréquence (F ± ΔFB1 + ΔFD1 ± ΔFM) avec une fréquence (F ± ΔFB1 + 2.ΔFD1 ± ΔFM), l'effet Doppler ΔFD1 s'appliquant au signal émis du terminal M vers la station de base B1 étant égal à l'effet Doppler ΔFD1 s'appliquant au signal émis de la station de base B1 vers le terminal M.

Ainsi, en résultat, la dérive fréquentielle totale aller-retour vue de la station de base est égale à (2.ΔFD1 ± ΔFM).

Dans le cadre du GSM, la procédure de changement de cellule est la suivante. Le mobile M reçoit une information de commande de changement de cellule dans un canal de signalisation associé au canal de communication établi avec B1. Cette information de commande de changement de cellule indique au mobile M la/les nouvelle (s) fréquence (s) d'échange de données avec la station de base suivante B2. En résultat de cela, le mobile M modifie sa/ses fréquence(s) d'émission/réception relativement à sa référence de fréquence locale courante, c'est à dire, dans la représentation de la figure 2, la fréquence (F + ΔFB1 + ΔFD1). Le mobile M recevant le signal émis par la station de base suivante B2 avec la fréquence (F ± ΔFB2 - ΔFD2), il doit modifier, par asservissement, la fréquence de son oscillateur de la valeur (ΔFD1 ± ΔFB1 ± ΔFB2 + ΔFD2) sachant que sa fréquence de référence locale possède déjà préalablement une dérive de (ΔFD1 ± ΔFB1 ± ΔFM) . En négligeant les termes ΔFB1, ΔFM et ΔFB2, la dérive fréquentielle à compenser par le terminal M sera donc égale (ΔFD1 + ΔFD2).

Ces deux termes ΔFD1 et ΔFD2 s'ajoutent sans se compenser sachant que, vu du terminal, l'effet Doppler tend à augmenter, respectivement diminuer, une fréquence émise par une station de base correspondante selon qu'il se rapproche, respectivement qu'il s'éloigne, de cette station de base.

Selon la technique antérieure, cette correction de l'effet Doppler, pouvant apparaître critique lors d'un changement de cellule pour un mobile à vitesse élevée, est compensée par le terminal M. Il est à noter que dans le cas d'un transfert de communication, le terminal doit prendre en compte la dérive fréquentielle ($\Delta FD1 \pm \Delta FB1 \pm \Delta FB2 + \Delta FD2$). Le terminal est pour cela muni de moyens de calcul d'autant plus performants et complexes que la vitesse possible de déplacement du terminal est élevée, ce qui augmente la difficulté de réalisation technique du terminal.

Un premier objectif de l'invention est de remédier à l'inconvénient précité en fournissant un procédé particulièrement avantageux de correction de l'effet Doppler dans un réseau de radiocommunications avec les mobiles, notamment en vue de réduire la complexité du terminal. Selon l'invention, ou bien il est prévu de corriger en continu ce décalage de fréquence de sorte que la station de base impose au mobile sa référence fréquentielle, ou bien cet effet Doppler, qui peut apparaître critique lors d'un changement de cellule, ou handover, et provoquer une perte de la communication en cours, est corrigé seulement avant le transfert d'une communication d'une station de base courante vers une station de base suivante.

Un second objectif de l'invention est de fournir une mise en oeuvre particulière de ce procédé dans le cadre d'un transfert de communication.

Un troisième objectif de l'invention est de fournir une station de base pour la mise en oeuvre de ce procédé.

Un autre objectif de l'invention est de fournir un terminal de radiocommunications apte à être utilisé dans un réseau de radiocommunications mettant en oeuvre le procédé de l'invention.

A cette fin, un procédé de correction de l'effet Doppler dans un réseau de radiocommunications avec les mobiles, est caractérisé selon l'invention en ce qu'il comprend les étapes de:

- mesure par une station de base courante d'une dérive fréquentielle aller-retour entre elle-même et un mobile,
- émission par station de base courante à destination du mobile d'une valeur de correction fréquentielle qui est fonction de ladite dérive fréquentielle, et
- correction par le mobile d'une référence de fréquence locale en fonction de ladite valeur de correction fréquentielle.

Typiquement, la mesure est réalisée en fonction, d'une part, d'une fréquence de réception qui a priori doit être générée en fonction d'une référence de fréquence locale et, d'autre part, de ladite fréquence de réception qui est réellement reçue en provenance du mobile.

Selon une variante, l'étape de correction par le mobile de la référence de fréquence locale en fonction de la valeur de correction fréquentielle est mise en oeuvre avant un échange de données avec une station de base suivante, qui suit un transfert de communication à partir de la station de base courante vers cette station de base suivante, et l'étape de correction par le mobile de sa référence de fréquence locale comprend l'étape de soustraction de sensiblement la moitié de la dérive fréquentielle mesurée à la référence de fréquence locale.

Par exemple, la valeur de correction fréquentielle est émise dans un canal de signalisation par ladite station de base courante à destination du mobile.

Une station de base pour la mise en oeuvre d'un procédé, comprenant un moyen d'asservissement de fréquence d'un oscillateur à la fréquence de modulation de données reçues, est caractérisée en ce qu'elle comprend :

- des moyens coopérant avec ce moyen d'asservissement de fréquence pour capturer une information relative à ladite dérive fréquentielle aller-retour, et
- des moyens pour émettre à destination du mobile ladite valeur de correction fréquentielle qui est fonction de la dérive fréquentielle aller-retour.

Un terminal pour la mise en oeuvre du procédé est caractérisé en ce qu'il comprend des moyens pour corriger une référence de fréquence locale en fonction de la valeur de correction fréquentielle reçue.

D'autres caractéristiques et avantages de la présente invention apparaîtront plus clairement à la lecture de la description suivante, en référence aux dessins annexés correspondants, dans lesquels:

- la figure 1, déjà commentée, est un diagramme vectoriel explicitant le calcul de la dérive fréquentielle induite par effet Doppler;
- la figure 2, également déjà commentée, est un diagramme fréquentiel montrant les différentes dérives fréquentielles s'appliquant dans les échanges de données entre un terminal et des stations de base courante et suivante;
- la figure 3 montre un bloc-diagramme d'un circuit d'asservissement en fréquence dans une station de base pour la mise en oeuvre du procédé selon l'invention; et
- la figure 4 est un bloc-diagramme d'un circuit d'oscillation dans un terminal selon l'invention.

Le procédé de correction de l'effet Doppler selon l'invention prévoit que la station de base courante B1 mesure une dérive fréquentielle aller-retour entre elle-même et le mobile M en fonction, d'une part, d'une référence de fréquence locale et, d'autre part, de la fréquence ($F \pm \Delta FB1 + 2.\Delta FD1 \pm \Delta FM$) de réception en

provenance du mobile M. Comme montré dans la figure 2, la référence de fréquence locale à la station de base B1 correspond à une fréquence qui présente une dérive de $\pm \Delta FB1$ par rapport à une fréquence théorique, ou normative, F.

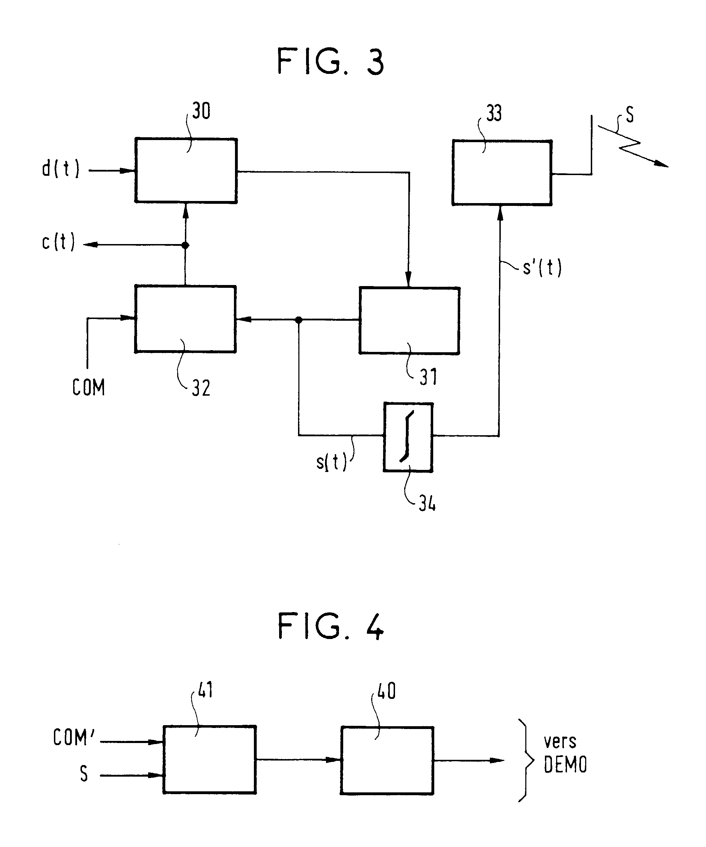

Comme montré dans la figure 3, et selon une réalisation donnée à titre d'exemple, la station de base B1 mesure cette dérive fréquentielle aller-retour en utilisant son dispositif d'asservissement de fréquence d'un oscillateur à la fréquence de modulation de données reçues. Le dispositif d'asservissement de fréquence comprend un comparateur de phase 30, un filtre de boucle 31 et un oscillateur commandable en tension 32. Le comparateur de phase 30 reçoit le signal de données d (t) modulé à la fréquence de réception $(F \pm \Delta FB1 + 2.\Delta FD1 \pm \Delta FM)$. L'oscillateur 32 est commandé initialement par un signal COM pour produire un signal c(t) à une fréquence de réception devant être générée a priori en fonction d'une référence de fréquence propre à la station de base B1. Ainsi, initialement, la fréquence du signal c(t) possède donc une dérive fréquentielle de $(\pm \Delta FB1)$ par rapport à la fréquence normative à générer. De manière connu dans ce type de dispositif d'asservissement de fréquence, le signal s(t) généré en sortie du filtre de boucle 31 est proportionnel à la différence de fréquence entre la fréquence du signal reçu d(t), ici égale à $(F \pm \Delta FB1 + 2.\Delta FD1 \pm \Delta FM)$, et la fréquence du signal généré par l'oscillateur 32. Ainsi, en intégrant 34 ce signal s(t) à compter de l'instant d'initialisation de la boucle, est obtenu un signal s'(t) qui est proportionnel à $(2.\Delta FD1 \pm \Delta FM)$.

La valeur du signal s'(t) est capturée et constitue une information de dérive fréquentielle aller-retour entre la station de base B1 et le mobile M. La station de base B1 émet, à travers un dispositif d'émission 33, à destination du mobile M une valeur de correction fréquentielle S qui est fonction de cette information de dérive fréquentielle. Selon une réalisation, cette valeur de correction fréquentielle S est émise dans un canal de signalisation associé au canal de communications établi entre la station de base courante B1 et le mobile M.

Selon une première variante, la correction par le mobile M de la dérive fréquentielle due à l'effet Doppler peut être réalisée indépendamment de tout transfert de communication de la station de base courante vers une station de base suivante. Dans ce cas, périodiquement, la station de base courante B1 émet à destination du mobile M la valeur de correction fréquentielle S qui prend une valeur égale à $(2.\Delta FD1 \pm \Delta FM)$ de sorte que le mobile M aligne en continu sa référence de fréquence locale sur celle de la station de base courante B1. Typiquement, le mobile modifie sa référence de fréquence locale d'une valeur sensiblement égale à la moitié de $(2.\Delta FD1 \pm \Delta FM)$, de sorte que sa référence de fréquence locale coïncide avec celle de la station de base courante B1.

Selon une autre variante, il peut être prévu que le mobile ne corrige sa référence de fréquence locale que précédemment à un échange de données avec la station de base suivante B2, qui suit un transfert de communication à partir de la station de base courante B1 vers cette station de base suivante B2. Dans ce cas, le mobile M corrige sa référence de fréquence locale en fonction de la valeur de correction fréquentielle S reçue en provenance de la station de base courante B1 précédemment à ce transfert de communication.

Comme montré dans la figure 4, le mobile M comprend un oscillateur 40 dont une sortie est appliquée à une entrée d'un modulateur/démodulateur, et une unité de commande d'oscillateur 41. Dans le terminal M, la référence de fréquence locale est définie par la/les fréquence(s) d'émission et réception courante(s) utilisée(s) pour la communication en cours avec la station de base courante B1. Lorsque le mobile M modifie ses fréquences d'émission et réception juste avant un changement de cellule, une nouvelle valeur COM' est appliquée à l'entrée de l'unité de commande d'oscillateur 41, cette valeur COM' étant déterminée en fonction de la référence de fréquence locale, c'est à dire de la valeur COM' courante retenue pour les échanges de données avec la station de base courante B1. L'unité de commande d'oscillateur 41 reçoit donc cette nouvelle valeur COM', et, en outre, la valeur de correction fréquentielle S reçue en provenance de la station de base courante B1. L'unité de commande d'oscillateur 40 agit, en conséquence, comme un correcteur de la référence de fréquence locale du mobile M en fonction de la valeur de correction fréquentielle S.

En revenant à la figure 2, la fréquence de réception par le mobile en provenance de la station de base B1 est donnée par $(F \pm \Delta FB1 + \Delta FD1)$, et cette fréquence définit la référence de fréquence locale du mobile pour la génération de la fréquence $(F \pm \Delta FB2 - \Delta FD2)$ de réception en provenance de la station de base suivante B2. Abstraction faite de la différence normative (qui est multiple de 200 kHz dans le cadre du GSM) entre fréquence de réception en provenance de B1 et fréquence de réception en provenance de B2, l'on voit que le mobile doit compenser la dérive en fréquence $(\Delta FD1 \pm \Delta FB1 \pm \Delta FB2 + \Delta FD2)$ pouvant apparaître prohibitive lorsque le mobile possède une vitesse élevée.

Selon l'invention, la prise en compte par le mobile de la valeur de correction fréquentielle S lui permet en quelque sorte de corriger sa référence de fréquence locale. Avantageusement, dans le cas d'une correction par le mobile de sa référence de fréquence locale précédemment à un échange de données avec la station de base suivante B2, cette correction est réalisée par soustraction à la référence de fréquence locale courante, présentant une dérive de $(\pm \Delta FB1 + \Delta FD1)$, de sensiblement la moitié de la dérive fréquentielle aller-retour mesurée $(2.\Delta FD1 \pm \Delta FM)$.

Ainsi, en résultat, la référence de fréquence locale du mobile M possède alors une dérive de $(\pm \Delta FB1 \pm \Delta FM/2)$ par rapport à la fréquence théorique normative. L'effet Doppler existant par rapport à la station de base B1 est alors pris en compte par le mobile et ce dernier ne doit donc plus compenser, si l'on néglige les termes $\Delta FB1$, $\Delta FM$ et $\Delta FB2$, que la dérive fréquentielle induite par l'effet Doppler existant avec la station de base suivante B2 qui n'est pas connue a priori.

## Revendications

1. Procédé de correction de l'effet Doppler dans un réseau de radiocommunications avec les mobiles, caractérisé en ce qu'il comprend les étapes de:

   - mesure par une station de base courante (B1) d'une dérive fréquentielle aller-retour ($2.\Delta FD1 \pm \Delta FM$) entre elle-même et un mobile (M),
   - émission par ladite station de base courante (B1) à destination du mobile (M) d'une valeur de correction fréquentielle (S) qui est fonction de ladite dérive fréquentielle ($2.\Delta FD1 \pm \Delta FM$), et
   - correction par le mobile (M) d'une référence de fréquence locale en fonction de ladite valeur de correction fréquentielle.

2. Procédé conforme à la revendication 1 , caractérisé en ce que ladite mesure est obtenue en fonction, d'une part, d'une fréquence de réception ($F \pm \Delta FB1$) qui a priori doit être générée et, d'autre part, de ladite fréquence ($F \pm \Delta FB1 + 2.\Delta FD1 \pm \Delta FM$) de réception qui est réellement reçue en provenance du mobile (M).

3. Procédé conforme à la revendication 1 ou 2, caractérisé en ce que ladite étape de correction par le mobile (M) de la référence de fréquence locale en fonction de ladite valeur de correction fréquentielle est mise en oeuvre avant un échange de données avec une station de base suivante (B2), qui suit un transfert de communication à partir de la station de base courante (B1) vers cette station de base suivante (B2), et en ce que l'étape de correction par le mobile (M) de sa référence de fréquence locale comprend l'étape de soustraction de sensiblement la moitié de la dérive fréquentielle mesurée ($2.\Delta FD1 \pm \Delta FM$) à ladite référence de fréquence locale.

4. Procédé conforme à l'une quelconque des revendications précédentes, caractérisé en ce que ladite valeur de correction fréquentielle (S) est émise dans un canal de signalisation par ladite station de base courante à destination du mobile.

5. Station de base (B1) pour la mise en oeuvre d'un procédé conforme à l'une quelconque des revendications 1 à 4, comprenant un moyen (30, 31, 32) d'asservissement de fréquence d'un oscillateur à la fréquence de modulation de données reçues (d(t)), caractérisée en ce qu'elle comprend

   - des moyens coopérant avec ledit moyen d'asservissement de fréquence pour capturer une information (s'(t)) relative à ladite dérive fréquentielle aller-retour, et
   - des moyens (33) pour émettre à destination du mobile (M) ladite valeur de correction fréquentielle (S) qui est fonction de la dérive fréquentielle aller-retour.

6. Terminal mobile de radiocommunications pour la mise en oeuvre du procédé conforme à l'une quelconque des revendications 1 à 4, caractérisé en ce qu'il comprend des moyens (41) pour corriger une référence de fréquence locale en fonction de ladite valeur de correction fréquentielle reçue (S).

# FIG. 1

# FIG. 2

# FIG. 3

d(t) → [30]

c(t) ←

COM → [32]

[31]

∫ [34]

s(t)

s'(t)

[33] → S

# FIG. 4

COM' → [41]
S →

→ [40] → } vers DEMO

## RAPPORT DE RECHERCHE EUROPEENNE

Office européen des brevets

Numéro de la demande

EP 97 40 2961

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>A | EP 0 457 542 A (SONY)<br>* page 4, colonne 3, ligne 9 - page 6, colonne 7, ligne 8; figures *<br>--- | 1<br>2-6 | H04B7/26 |
| A | GB 2 277 232 A (MOTOROLA)<br>* page 4, ligne 38 - page 10, ligne 37; figures *<br>--- | 1-6 | |
| A | EP 0 705 011 A (ALCATEL)<br>* page 3, colonne 3, ligne 53 - page 5, colonne 7, ligne 55; figures *<br>--- | 1-3 | |
| A | WO 96 08882 A (ERICSSON)<br>* page 5, ligne 2 - page 12, ligne 2; figures *<br>--- | 1-3 | |
| A | EP 0 660 627 A (NOKIA)<br>* page 3, colonne 4, ligne 37 - page 5, colonne 7, ligne 56; figures *<br>--- | 1 | |
| A | US 3 593 138 A (DUNN ET AL.)<br>* colonne 4, ligne 9 - colonne 21, ligne 50; figures *<br>----- | 1 | DOMAINES TECHNIQUES RECHERCHES (Int.Cl.6)<br><br>H04B<br>H04Q |

Le présent rapport a été établi pour toutes les revendications

| Lieu de la recherche | Date d'achèvement de la recherche | Examinateur |
|---|---|---|
| LA HAYE | 17 mars 1998 | Geoghegan, C |